# EUROPEAN PATENT APPLICATION

(11) **EP 2 073 141 A1**
(43) Date of publication of application: **24.06.2009**
(21) Application number: 08791803.3
(22) Date of filing: 29.07.2008
(51) Int. Cl.: G06F 21/24, G06F 3/06

(54) **INFORMATION PROCESSING DEVICE AND METHOD, COMPUTER-READABLE RECORDING MEDIUM, AND EXTERNAL STORAGE MEDIUM**

(30) Priority: 30.07.2007 JP 2007196849
(71) Applicant: Hitachi Software Engineering Co., Ltd., Shinagawa-ku Tokyo 140-0002 (JP)
(72) Inventor: KIRIHATA, Yasuhiro, Tokyo 140-0002 (JP)
(74) Representative: Liesegang, Eva
(86) International application number: PCT/JP2008/063568
(87) International publication number: WO 2009/017110

(57) **Abstract**

There is realized such a method for safely using and storing secret data that electronic copies of the secret data do not flow out of a particular external storage medium. In the present invention, a special format area which cannot be recognized from an ordinary PC is created in an external storage medium, and secret data is stored therein. By making a configuration in which a function of mounting the special format area is provided, and secret data in the special format area is edited and used on a work OS on which network access is inhibited and writing to a secondary storage device is inhibited, the destination of storing the secret data after it is used is limited to the special format area on the external storage medium so that outflow of the secret data from the external storage medium is prevented.

## Description

### Technical Field

The present invention relates to an information processing apparatus and method, a computer-readable recording medium, and an external storage medium, and, for example, relates to processing for preventing leakage of secret data from an external recording medium.

### Background Art

Typical examples of a method for preventing secondary outflow of data which has been conventionally used include a digital rights management technique. This is a technique in which a user executes encrypted contents while decrypting the contents using reproduction software, and the mechanism is such that distribution and execution of a decryption key stored in a policy server on a network or stored locally is controlled in accordance with a security policy so that only licensed users can view the contents. This basic mechanism is disclosed, for example, in Patent Document 1.
Patent Document 1: JP Patent Publication (Kokai) No. 2006-268867 A

### Disclosure of the Invention

### Problems to be Solved by the Invention

In the method disclosed in Patent Document 1, however, contents are basically protected by encryption, and there is a possibility that the protection of contents is broken by cryptanalysis. Furthermore, in the case of handling secret data such as customer data, it is impossible to stop copying of the secret data from spreading though the data is encrypted. In consideration of the latest situation in which it is a duty to make an apology to customers or make a report to supervisory authorities in the case of having lost the encrypted customer data, and the loss itself is a serious violation of compliance, the method cannot be said to be an optimum solution.

The present invention has been made in view of such a situation, and it not only protects distributed data (secret data) by encryption but also prevents leakage itself of the distributed data.

### Means for Solving the Problems

In order to solve the above problem, the present invention creates a special format area in an external storage medium, enables access to the special format area, and inhibits access to an external storage medium which does not have the special format area. Furthermore, even in the case of an external storage medium having the special format area, when the special format area is mounted onto a guest OS (work OS), mounting is permitted only when the special format area corresponds to a special format area mounted last.

That is, the information processing apparatus according to the present invention is an information processing apparatus which manages data stored in a connected external storage medium, the information processing apparatus being characterized in comprising: test means for testing whether or not a special format area which is an area for storing secret data exists in the external storage medium; access means for accessing the special format area; and access inhibiting means for inhibiting access to the external storage medium by the access means if it is judged by the test means that the external storage medium does not have the special format area. Here, the access means is realized by a work OS which is a guest OS operating on a virtual machine monitor set in the information processing apparatus. A work OS image specifying the contents of the work OS is acquired from the outside, and the work OS is set in the virtual machine monitor. The work OS image may be acquired from the external storage medium in which the secret data is stored or may be acquired from a server on a network.

The work OS comprises a work application for using or editing the secret data. Then, the access means accesses the special format area of the external storage medium to store the secret data used and edited by the work application into the special format area.

Furthermore, the work OS comprises secondary storage device access control means for controlling access to a secondary storage device of the information processing apparatus. Then, the secondary storage device access control means hooks a request by the work application for access to the secondary storage device, and, if the access request is a request for writing to the secondary storage device, caches the secret data into a cache memory and ends the writing processing.

The special format area has a special format header in which specific information comprising the whole size and the sector size of the special format area is held, a sector management table recording area in which relationship between an actual sector address and the sector address of the special format area is encrypted and stored, and a format area body in which secret data is stored.

Furthermore, when the information of the special format area is mounted, identification information specific to a special format area to be mounted this time is acquired, it is checked whether or not the special format area corresponds to a special format area which has been already mounted, and the mounting is inhibited if the special format area does not correspond.

The present invention also provides an information processing method corresponding to the information processing apparatus described above, a recording medium in which a program for executing the method is stored, and the internal structure of a specific external storage medium used for the information processing.

Further characteristics of the present invention will be apparent from Best Mode for Carrying Out the Invention below and accompanying drawings.

### Advantage of the Invention

According to the processing of the present invention, it is possible to efficiently prevent leakage of distributed data (secret data).

### Brief Description of the Drawings

Figure 1 is a diagram showing the schematic configuration of an information processing system according to an embodiment of the present invention.
Figure 2 is a diagram showing the configuration of a storage area on an external storage medium.
Figure 3 is a diagram showing an example of the configuration of a sector management table.
Figure 4 is a flowchart for illustrating the processing performed at the time of editing secret data.
Figure 5 is a flowchart for illustrating the processing for mounting a special format area.
Figure 6 is a flowchart for illustrating the processing by a network access control driver.
Figure 7 is a flowchart for illustrating the processing by an external medium access control driver.
Figure 8 is a flowchart for illustrating the processing by a secondary storage device writing control driver.

### Description of Symbols

101 ... user terminal
102 ... external storage medium
103 ... USB cable
104 ... FAT format area
105 ... work OS image
106 ... special format area
107 ... secret data
108 ... OS
109 ... application
110 ... virtual machine monitor
111 ... work OS
112 ... work application
113 ... network access control driver
114 ... external medium access control driver
115 ... secondary storage device writing control driver
116 ... mounting tool
117 ... special format I/O driver
201 ... free space
202 ... special format header
203 ... sector management table storage area
204 ... special format start sector
205 ... special format end sector
301 ... actual sector address
302 ... special format sector address

### Best Mode for Carrying Out the Invention

The present invention relates to information processing for activating a virtual machine monitor on a user terminal to which a specially formatted external storage medium is connected and inhibiting writing to an internal hard disk, writing to other external recording media which are not specially formatted, and access to a network, on the virtual machine monitor. By creating an environment in which secret data created on the user terminal cannot be copied to places other than the specially formatted external storage medium, leakage of the secret data from the external storage medium is prevented.

An embodiment of the present invention will be described below with reference to accompanying drawings. However, this embodiment is only an example for realizing the present invention, and it should be noted that this embodiment does not limit the technical scope of the present invention. Components common to the drawings are given the same reference numerals.

### <Configuration of information processing system>

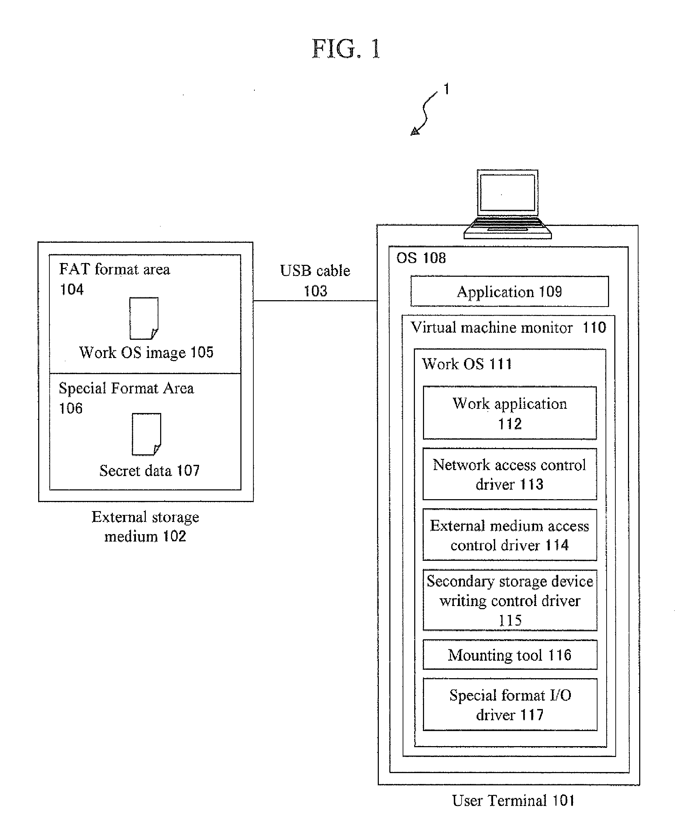

Figure 1 is a diagram showing the schematic configuration of an information processing system according to an embodiment of the present invention. An information processing system 1 is configured by connecting a user terminal 101 and an external storage medium 102 via a USB cable 103.

On the user terminal 101, an OS 108 which is to be a base, an application 109 which operates on the OS 108 (for example, a web browser or a document creation application), and a virtual machine monitor 110 are installed, and a work OS 111 is running on the virtual machine monitor 110. The work OS 111 has been booted from the external storage medium 102. Here, the virtual machine monitor 110 is software for emulating the hardware environment of a PC with software to cause another OS to run on an OS, Typical products include Virtual PC of Microsoft Corporation, VMware Workstation of VMware Corporation, and the like. In the case of the configuration shown in Figure 1, the OS 108 is a host OS, and the work OS 111 is a guest OS.

In the work OS 111, there are incorporated a work application 112, a network access control driver 113, an external medium access control driver 114, a secondary storage device writing control driver 115, a mounting tool 116, and a special format I/O driver 117. The contents of the work OS 111 is packaged in a work OS image 105.

On the other hand, the external storage medium 102 has a FAT (File Allocation Table) format area 104 and a special format area 106. The work OS image 105 operating on the virtual machine monitor 110 and secret data 107 are stored in the FAT fonnat area and the special format area 106, respectively. The work OS is not necessarily required to be in the external storage medium 102, and, for example, it may be acquired by accessing a predetermined server on the network. In this case, if a user executes authentication processing when accessing this server, security is strengthened.

The work application 112 on the work OS 111 of the user terminal 101 is an application for editing the secret data 107, and, for example, applications used for works, such as word processing or spreadsheet software, music/video editing software, a designing tool and CAD, correspond to this application.

The network access control driver 113 monitors the application in the work OS 111 performing network access on an IP packet basis, to inhibit network access to sites other than particular permitted sites. Due to this function, it is possible to prevent the secret data 107, which is used by the work OS, from being leaked via the network while enabling an application which indispensably requires network connection for execution, such as activation of a CAD, to be usable on the work OS 111.

The external medium access control driver 114 has a function of inhibiting writing to an external storage medium 102 which does not have the special format area 106 for storing the secret data 107, such as an ordinary USB memory and external hard disk.

The secondary storage device writing control driver 115 monitors I/O to/from a (virtual) secondary storage device from/to the file system of the work OS. As for writing of data, it caches the data into the memory. As for reading, it returns what is obtained by synthesizing cached data and data read from the secondary storage device. Thereby, the (virtual) secondary storage device is enabled to function as a read-only device. By incorporating this driver into the work OS 111, secret data cannot be written and stored into the work OS image 105 on the user terminal 101 via the virtual machine monitor, even if a user copies the work OS image 105 onto the user terminal 101 and performs execution using the virtual machine monitor. Therefore, even if a user copies the work OS image 105 to the user terminal 101, activates it, and locally stores the secret data 107 with the intention of illegally storing the secret data 107, the mechanism prevents the storage.

The special format I/O driver 117 is a device driver for enabling the special format area 106 of the external storage medium 102 to be mounted onto the work OS 111 and used. By loading the special format area 106 using the mounting tool 116, the special format area 106 is mounted onto the work OS 111. The special format area 106 cannot be recognized as a file without this special format I/O driver 117, and therefore, even if access to the secret data 107 is attempted from a different existing PC's, the file access is impossible. File copying of the secret data 107 stored in the external storage medium 102 is not possible by an existing PC, and it is not possible to store the secret data 107 into a place on the network or store it locally by the work OS which can access. The secret data 107 can be stored only into the special format area 106. Therefore, it is impossible to leak the secret data 107 to the outside from the external storage medium. Thus, since the secret data 107 is completely bound to the external storage medium 102, it is possible to completely manage the secret data 107 by managing the external storage medium 102.

### <Internal configuration of external storage medium>

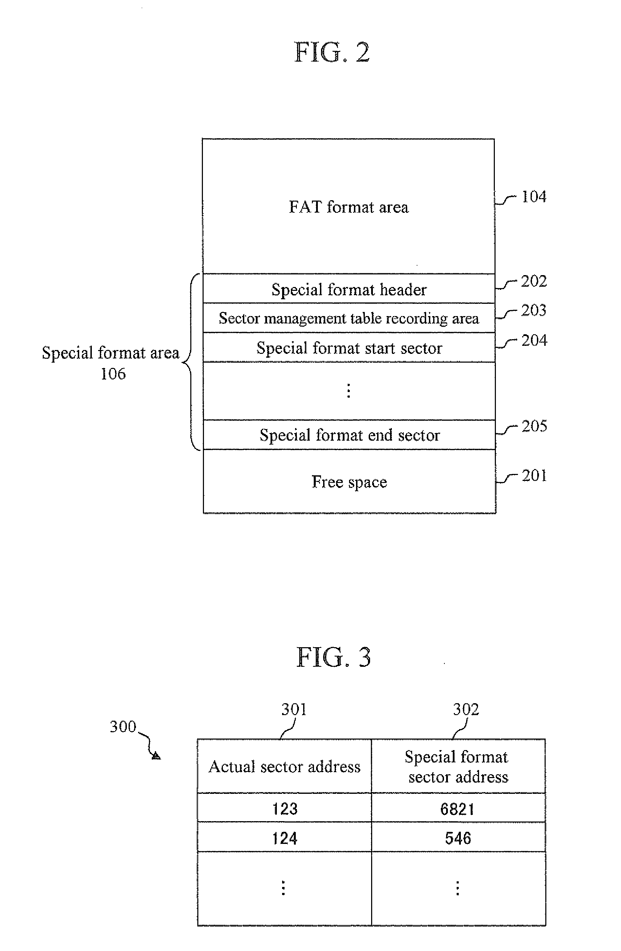

Figure 2 is a block diagram of a storage area on an external storage medium. In this embodiment, it is assumed that ordinary data other than secret data 107 is not stored in the external storage medium.

As shown in Figure 2, the storage area is roughly divided in three areas of an FAT format area 104, a special format area 106 and a free space 201. The FAT format area 104 is an area in a file format which can be accessed from Windows, Linux and the like and is an area for storing a work OS image. The special format area 106 is configured by a special format header 202, a sector management table storage area 203, and a subsequent storage area divided in sectors. The special format header 202 is a part where the start part of the special format area 106 and format area information such as the area size and the latest update date and time are stored. The sector management table storage area 203 is an area where a sector management table (see Figure 3) for managing a pair of an actual sector address and a corresponding special format sector address is encrypted and stored. The actual secret data 107 is stored in the sectors from a special format start sector 204 to a special format end sector 205.

Figure 3 is a block diagram of a sector management table 300. The sector management table 300 is a table for managing an actual sector address 301 and a special format sector address 302 as a pair. For example, in the case where the actual sector address is 123 and the special format sector address is 6821, the special format I/O driver changes processing for reading from and writing to the sector address 123 to processing for reading from and writing to the special format sector address 6812 and accesses the external storage medium 102. Thus, since the secret data 107 is distributedly stored in the special format area 106, it is not possible to access desired data without the sector management table 300 even if only the actual sector address 301 is known. Furthermore, since the sector management table 3 00 itself is encrypted, security can be further strengthened.

### <Secret data editing processing>

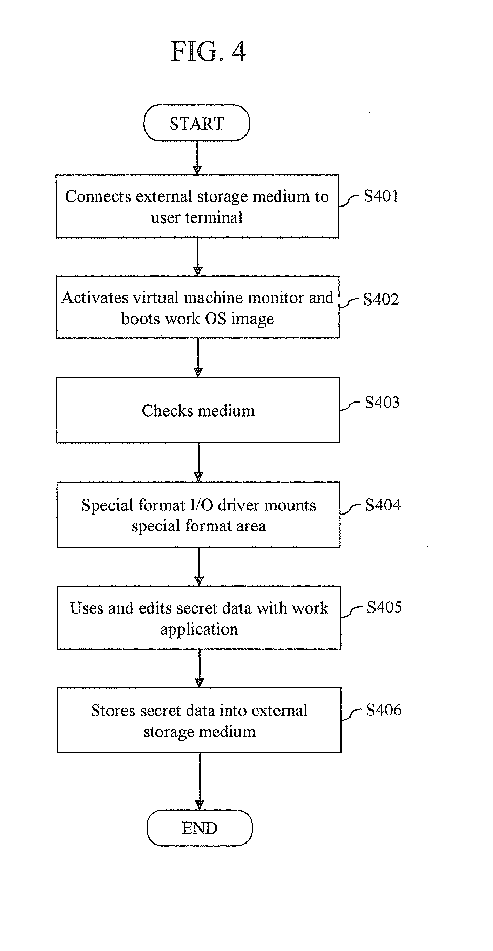

Figure 4 is a flowchart for illustrating the processing performed at the time of editing secret data. First, an external storage medium is connected to a user terminal (step S401). Next, activation of the virtual machine monitor 110 is instructed, and the activated virtual machine monitor 110 boots the work OS image 105 stored in the FAT format area 104 of the external storage medium 102 (step S402).

Next, the external medium access control driver 114 checks whether the special format area 106 is included in the external storage medium (step S403).

Then, a user uses the mounting tool 116 of the activated work OS image 105 to load the special format I/O driver 117, and mounts the special format area 106 onto the work OS 111 (step S404). Thereby, it is possible to access the secret data 107 in the external storage medium 102 from the work OS image 105 (the work OS 111 introduced into the user terminal 101).

The user is also enabled to use and edit the secret data 107 using the work application 112 (step S405). Finally, the edited secret data 107 is stored in the special format area 106 in the mounted external storage medium 102 (step S406). In the case where the number of sectors of the edited secret data 107 has increased when the edited secret data 107 is stored, sector addresses are given by the special format I/O driver 117.

### <Special format area mounting processing: step S404>

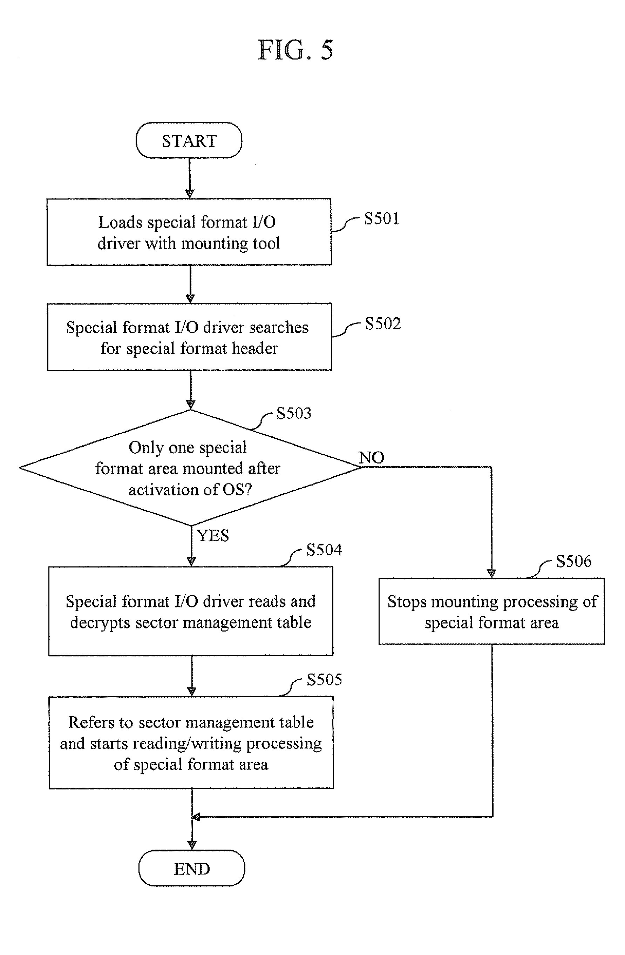

Figure 5 is a flowchart for illustrating the details of the processing for mounting the special format area 106 (step S404 in Figure 4).

First, the user loads the special format I/O driver 117 using the mounting tool 116 (step S501). When the special format I/O driver 117 is loaded, the special format I/O driver 117 accesses the external storage medium 102 to search for a special format header (step S502).

Then, the special format I/O driver 117 judges whether or not the special format area 106 is only one special format area that has been mounted after activation of the OS (step S503). More specifically, if an external storage medium 102 having a special format area 106 has been mounted once or more times after activation of the work OS, it is checked whether this external storage medium 102 is the same as the external storage medium 102 mounted last, from ID information unique to each special format area which is included in the header. Thereby, it is confirmed that the external storage medium 102 which includes the special format area 106 which is going to be mounted is only one external storage medium mounted after activation of the work OS.

If the special format area is a new one, or the external storage medium 102 is the same external storage medium 102 mounted last, at step S503, then the special format I/O driver 117 reads the sector management table 300 and decrypts it (step S504). Here, it is assumed that a decryption key is stored in a safe area which cannot be accessed by an unauthorized user or program, such as Trusted Platform Module, an IC card and an obfuscated program. By referring to the sector management table 300 obtained by decryption, reading/writing processing of the special format area 106 is started (step S505).

On the other hand, if the special format area has been mounted last, and the external storage medium 102 is different from the external storage medium 102 from which the special format area was mounted, at step S503, then there is a possibility that the secret data 107 in the contents of the special format area mounted last is copied to the external storage medium 102 which is going to be newly mounted, and therefore, the special format I/O driver 117 stops the mounting processing (step S506). Thereby, the secret data 107 stored in the special format area 106 is never copied from the area permanently. That is, it becomes impossible to insert a different external storage medium (for example, a USB memory) having a special format area into the user terminal 101 to write data thereto. Thus, predetermined secret data 107 can be stored only into a predetermined external storage medium which is the source from which the secret data 107 has been drawn.

In the case of permitting copying to a different external storage medium 102 having a special format area 106, the processing at step S503 is not necessary, and mounting may be unconditionally performed when the special format area 106 is found.

### <Processing performed at the time of accessing network>

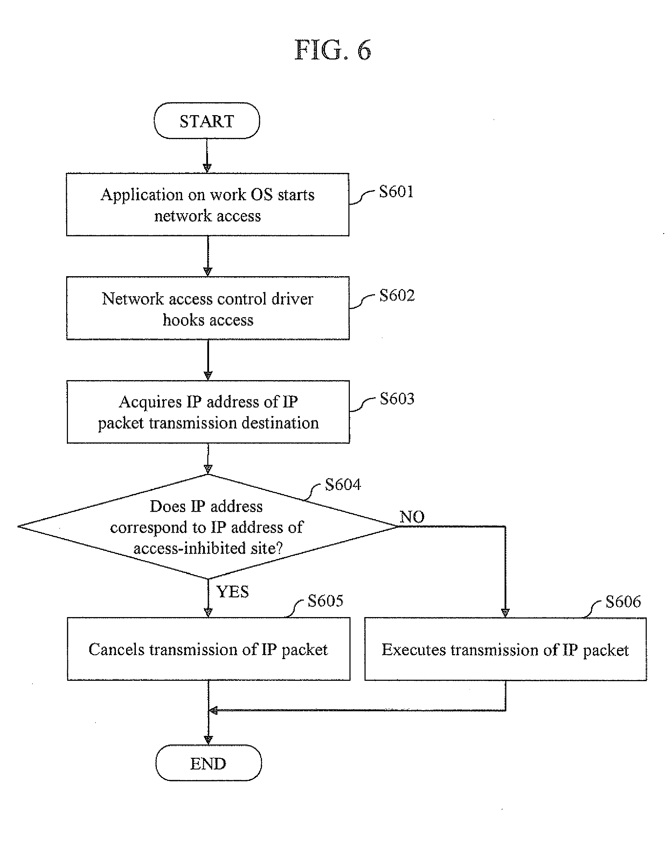

Figure 6 is a flowchart for illustrating the processing by the network access control driver 113. When the work application 112 on the work OS starts network access (step S601), the network access control driver 113 hooks the access (step S602). This hooking can be realized as a function of a filter driver of Personal Firewall standardly implemented in the case of Windows (registered trademark) or an NDIS filter driver incorporated into a position higher than NDIS, for performing hooking.

Then, the network access control driver 113 acquires the IP address of the IP packet transmission destination from IP packet information acquired by the hooking (step S603). Furthermore, the network access control driver 113 verifies whether the IP address corresponds to any of IP addresses to access-inhibited sites prepared in advance (step S604). If so, transmission of the IP packet is cancelled (step S605). Otherwise, transmission of the IP packet is permitted (step S606).

### <Processing performed at the time of connecting external storage medium>

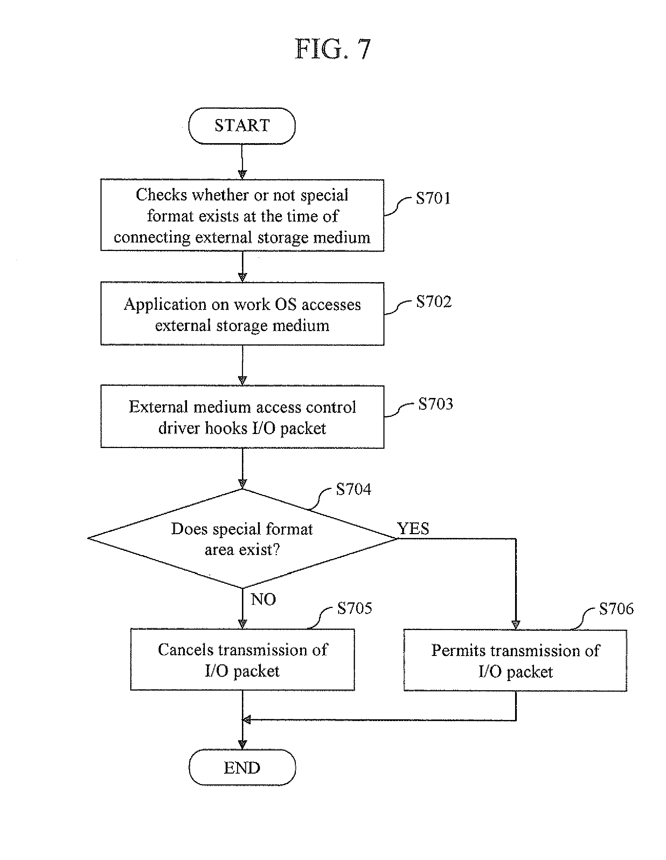

Figure 7 is a flowchart for illustrating the processing performed by the external medium access control driver 114 when an external storage medium is connected.

First, when an external storage medium is connected, the external medium access control driver 114 checks whether a special format exists inside it (step S701). Then, when the work application 112 on the work OS accesses the external storage medium 102 (step S702), the external medium access control driver 114 hooks an I/O packet (step S703).

Then, the external medium access control driver 114 verifes whether a special format area 106 exists while referring to a flag indicating whether there is a special format area 106 of the external storage medium 102 to be accessed, which has been checked in advance (step S704).

If the external medium access control driver 114 judges that a special format area 106 exists, transmission of an I/O packet is permitted (step S706). On the other hand, if the external medium access control driver 114 judges that it does not exist, then transmission of the I/O packet is inhibited (step S705). By executing such processing, it is possible to prevent the secret data 107 from being copied and leaked to a general external storage medium in which the special format area 106 does not exist.

### <Processing for writing to secondary storage medium>

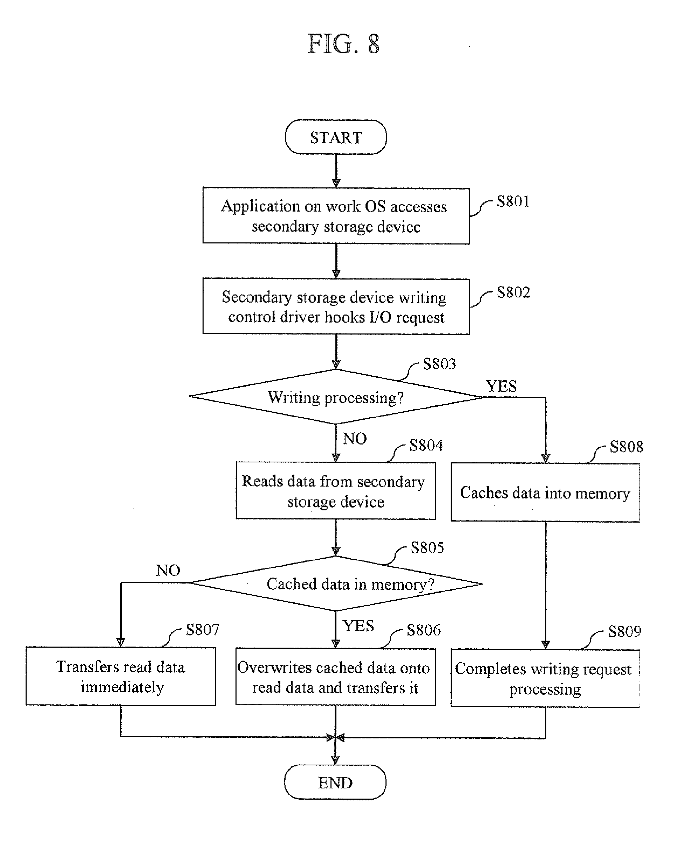

Figure 8 is a flowchart for illustrating the processing by the secondary storage device writing control driver 115.

When the work application 112 on the work OS accesses a secondary storage device (virtual HDD) not shown (step S801), the secondary storage device writing control driver 115 hooks the I/O request (step S802).

The secondary storage device writing control driver 115 analyzes the acquired I/O request and checks whether it is a request for writing to or reading from the secondary storage device (step S803). In the case of a writing request, the secondary storage device writing control driver 115 cashes the write data into the memory (step S808) and completes the writing request processing (step S809).

On the other hand, in the case of a reading request, the secondary storage device writing control driver 115 reads data from the secondary storage device (step S804), and checks whether the read data or a part of the data is already cached in the memory (step S805). If it is cached, the cached data is overwritten onto the read data and transferred to a higher-level driver (step S806). If the cached data does not exist in the memory, then the data read from the secondary storage device is immediately transferred (step S807).

Due to the function of the secondary storage device writing control driver 115 as described above, it is possible that, though data seems to the work application 112 to be written into the secondary storage device, the data is, actually, merely cached in the memory and is prevented from being recorded into the secondary device.

By adopting the above-described architecture, it is possible to bind the secret data 107 to the external storage medium 102. Furthermore, by physically managing the external storage medium 102, it is possible to strictly manage the secret data 107 without causing the secret data 107 to be spread. Therefore, for example, in the case where a consigning enterprise requests a consigned enterprise to do work and desires to collect all the products to prevent secondary outflow thereof due to the consigned enterprise's negligence, the consigning enterprise can store an OS image, in which an application required for the work is incorporated, and secret data into a specially formatted external storage device and distribute it, and finally retrieve the external storage medium itself after the work is done by a terminal PC of the consigned enterprise. It is a great advantage that introduction is easy because it is only necessary to install a virtual machine monitor in the terminal PC of the consigned enterprise without the necessity of changing the configuration of the terminal PC.

### <summary>

In the embodiment of the present invention, a special format area is created in an external storage medium, and the special format area is enabled to be accessed while it is inhibited to access an external storage medium which does not have the special format area. Thereby, it is possible to certainly manage secret data inside the external storage medium without the secret data being leaked, only by physically managing the external storage medium.

Furthermore, even in the case of an external storage medium having a special format area, when the special format area is mounted onto a guest OS (work OS), mounting is permitted only when the special format area corresponds to a special format area mounted last. Thereby, the secret data (the secret data after editing or after use) can be stored only into the external storage device from which corresponding secret data was taken out, and therefore, it is possible to prevent leakage of the secret data more certainly.

Thus, such storage and use of data can be realized that data is stored in an external storage medium, such as a USB memory and a portable compact external hard disk, and can be used, but storage of the data after the use of the data is limited to the external medium where the data was originally included in order to prevent copies of the data from being spread to other places.

Furthermore, the work OS which can handle the secret data is limited, and it is acquired only from the outside (for example, from an external storage medium in which the secret data is stored, or from a predetermined server on a network). Thereby, it is not possible for an existing PC to handle the secret data, and therefore, security for the secret data can be set more robustly.

Furthermore, the work OS includes a secondary storage device writing control section for managing accesses to the HDD (secondary storage device) of a user terminal (information processing apparatus). This secondary storage device writing control section hooks a request by a work application for access to the HDD. If the access request is a request for writing to the HDD, then the secondary storage device writing control section caches the secret data into a cache memory and ends the writing processing. Thereby, the user terminal can behave to the user as if it recorded the secret data into the HDD, and the user is not given an uncomfortable feeling. Since the secret data is not left in the user terminal, it is possible to prevent leakage of the secret data.

The present invention can be also realized by a program code of software which realizes the functions of the embodiment. In this case, a storage medium in which the program code is recorded is provided for a system or an apparatus, and a computer (or a CPU or an MPU) of the system or the apparatus reads the program code stored in the storage medium. In this case, the program code itself which has been read from the storage medium realizes the functions of the embodiment described before, and the program code itself and the recording medium in which the program code is stored constitute the present invention. As the storage medium for providing such a program code, for example, a floppy (registered trademark) disk, CD-ROM, DVD-ROM, hard disk, optical disk, magneto-optical disk, CD-R, magnetic tape, non-volatile memory card, ROM or the like is used.

It is also possible that an OS (operating system) or the like operating on a computer performs a part or all of the actual processing on the basis of instructions of the program code, and the functions of the embodiment described before are realized by the processing. Furthermore, it is also possible that, after the program code read from the storage medium is written into the memory on a computer, the CPU or the like of the computer perform a part or all of the actual processing on the basis of instructions of the program code, and the functions of the embodiment described before are realized by the processing.

It is also possible that: the program code of the software for realizing the functions of the embodiment is stored in storage means, such as a hard disk and a memory, of a system or an apparatus, or a storage medium such as a CD-RW and a CD-R, by being distributed via a network; and the realization is achieved by a computer (or a CPU or an MPU) of the system or the apparatus reading and executing the program code stored in the storage means or the storage medium.

## Claims

1. An information processing apparatus which manages data stored in a connected external storage medium, the information processing apparatus being **characterized in** comprising:
test means for testing whether or not a special format area which is an area for storing secret data exists in the external storage medium;
access means for accessing the special fonnat area; and
access inhibiting means for inhibiting access to the external storage medium by the access means if it is judged by the test means that the external storage medium does not have the special format area.

2. The information processing apparatus according to claim 1, **characterized in that:**
the access means is realized by a work OS which is a guest OS operating on a virtual machine monitor set in the information processing apparatus; and
the virtual machine monitor acquires a work OS image specifying the contents of the work OS from the outside and sets the work OS in the virtual machine monitor.

3. The information processing apparatus according to claim 2, **characterized in that:**
the external storage medium has an area for storing the work OS image; and
the virtual machine monitor acquires the work OS image from the external storage medium.

4. The information processing apparatus according to claim 2, **characterized in that:**
the work OS image is stored in a server on a network; and
the virtual machine monitor accesses the network to acquire the work OS image from the server.

5. The information processing apparatus according to any one of claims 2 to 4,
**characterized in that:**
the work OS comprises a work application for using or editing the secret data; and
the access means accesses the special format area of the external storage medium to store the secret data used and edited by the work application into the special format area.

6. The information processing apparatus according to claim 5, **characterized in that:**
the work OS comprises secondary storage device access control means for controlling access to a secondary storage device of the information processing apparatus; and
the secondary storage device access control means hooks a request by the work application for access to the secondary storage device, and, if the access request is a request for writing to the secondary storage device, caches the secret data into a cache memory and ends the writing processing.

7. The information processing apparatus according to any one of claims 1 to 6, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

8. The information processing apparatus according to any one of claims 1 to 7, **characterized in that,** when the information of the special format area is mounted, the access inhibiting means acquires identification information specific to a special format area to be mounted this time, checks whether or not the special format area corresponds to a special format area which has been already mounted, and inhibits mounting if the special format area does not correspond.

9. An information processing method for managing data stored in an external storage medium connected to an information processing apparatus, the information processing method being **characterized in** comprising:
a step of test means testing whether or not a special format area which is an area for storing secret data exists in the external storage medium;
a step of access means accessing the special format area; and
a step of access inhibiting means inhibiting access to the external storage medium by the access means if it is judged by the test means that the external storage medium does not have the special format area.

10. The information processing method according to claim 9, **characterized in that:**
the access means is realized by a work OS which is a guest OS operating on a virtual machine monitor set in the information processing apparatus; and
the virtual machine monitor acquires a work OS image specifying the contents of the work OS from the outside and sets the work OS in the virtual machine monitor.

11. The information processing method according to claim 10, **characterized in that:**
the work OS comprises a work application for using or editing the secret data; and
the method further comprises a step of the access means accessing the special format area of the external storage medium to store the secret data used and edited by the work application into the special format area.

12. The information processing method according to claim 11, **characterized in that:**
the work OS comprises secondary storage device access control means for controlling access to a secondary storage device of the information processing apparatus; and
the method further comprises a step of the secondary storage device access control means hooking a request by the work application for access to the secondary storage device, and, if the access request is a request for writing to the secondary storage device, caching the secret data into a cache memory and ending the writing processing.

13. The information processing method according to any one of claims 9 to 12, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

14. The information processing method according to any one of claims 9 to 13, **characterized in that** the method further comprises a step of, when the information of the special format area is mounted, the access inhibiting means acquiring identification information specific to a special format area to be mounted this time, checking whether or not the special format area corresponds to a special format area which has been already mounted, and inhibiting mounting if the special format area does not correspond.

15. A computer-readable recording medium in which a program for causing a computer to execute the information processing method according to any one of claims 9 to 14 is recorded.

16. An external storage medium which stores information and which is connected to an information processing apparatus and used, the external storage medium being **characterized in** comprising:
an original data storage area for guest OS which is an area for storing original data for generating a guest OS on a host OS, into the information processing apparatus; and
a special format area which is an area for storing secret data, to which means enabled to access thereto is limited.

17. The external storage medium according to claim 16, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

## Amended claims

### Amended claims under Art. 19.1 PCT

**1.** (Amended) An information processing apparatus which manages data stored in a connected external storage medium, the information processing apparatus being **characterized in** comprising:
test means for testing whether or not a special format area which is an area for storing secret data exists in the external storage medium;
access means for accessing the special format area; and
access inhibiting means for inhibiting access to the external storage medium by the access means if it is judged by the test means that the external storage medium does not have the special format area,
wherein when the information of the special format area is mounted, the access inhibiting means acquires identification information specific to a special format area to be mounted this time, checks whether or not the special format area corresponds to a special format area which has been already mounted, and inhibits mounting if the special format area does not correspond.

**2.** The information processing apparatus according to claim 1, **characterized in that:**
the access means is realized by a work OS which is a guest OS operating on a virtual machine monitor set in the information processing apparatus; and
the virtual machine monitor acquires a work OS image specifying the contents of the work OS from the outside and sets the work OS in the virtual machine monitor.

**3.** The information processing apparatus according to claim 2, **characterized in that:**
the external storage medium has an area for storing the work OS image; and
the virtual machine monitor acquires the work OS image from the external storage medium.

**4.** The information processing apparatus according to claim 2, **characterized in that:**
the work OS image is stored in a server on a network; and
the virtual machine monitor accesses the network to acquire the work OS image from the server.

**5.** The information processing apparatus according to any one of claims 2 to 4,
**characterized in that:**
the work OS comprises a work application for using or editing the secret data; and
the access means accesses the special format area of the external storage medium to store the secret data used and edited by the work application into the special format area.

**6.** The information processing apparatus according to claim 5, **characterized in that:**
the work OS comprises secondary storage device access control means for controlling access to a secondary storage device of the information processing apparatus; and
the secondary storage device access control means hooks a request by the work application for access to the secondary storage device, and, if the access request is a request for writing to the secondary storage device, caches the secret data into a cache memory and ends the writing processing.

**7.** The information processing apparatus according to any one of claims 1 to 6, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

**8.** (Deleted)

**9.** (Amended) An information processing method for managing data stored in an external storage medium connected to an information processing apparatus, the information processing method being **characterized in** comprising:
a step of test means testing whether or not a special format area which is an area for storing secret data exists in the external storage medium;
a step of access means accessing the special format area;
a step of access inhibiting means inhibiting access to the external storage medium by the access means if it is judged by the test means that the external storage medium does not have the special format area; and
a step of, when the information of the special format area is mounted, the access inhibiting means acquiring identification information specific to a special format area to be mounted this time, checking whether or not the special format area corresponds to a special format area which has been already mounted, and inhibiting mounting if the special format area does not correspond.

**10.** The information processing method according to claim 9, **characterized in that:**
the access means is realized by a work OS which is a guest OS operating on a virtual machine monitor set in the information processing apparatus; and
the virtual machine monitor acquires a work OS image specifying the contents of the work OS from the outside and sets the work OS in the virtual machine monitor.

**11.** The information processing method according to claim 10, **characterized in that:**
the work OS comprises a work application for using or editing the secret data; and
the method further comprises a step of the access means accessing the special format area of the external storage medium to store the secret data used and edited by the work application into the special format area.

**12.** The information processing method according to claim 11, **characterized in that:**
the work OS comprises secondary storage device access control means for controlling access to a secondary storage device of the information processing apparatus; and
the method further comprises a step of the secondary storage device access control means hooking a request by the work application for access to the secondary storage device, and, if the access request is a request for writing to the secondary storage device, caching the secret data into a cache memory and ending the writing processing.

**13.** The information processing method according to any one of claims 9 to 12, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

**14.** (Deleted)

**15.** (Amended) A computer-readable recording medium in which a program for causing a computer to execute the information processing method according to any one of claims 9 to 13 is recorded.

**16.** (Amended) An external storage medium which stores information and which is connected to an information processing apparatus and used, the external storage medium being **characterized in** comprising:
an original data storage area for guest OS which is an area for storing original data for generating a guest OS on a host OS, into the information processing apparatus; and
a special format area which is an area for storing secret data, to which means enabled to access thereto is limited,
wherein the special format area has identification information to be used when the information of the special format area is mounted, for checking whether or not the special format area corresponds to a special format area which has been already mounted onto the information processing apparatus.

**17.** The external storage medium according to claim 16, **characterized in that** the special format area has a special format header in which specific information comprising the whole size and the sector size of the special format area is held, a sector management table recording area in which relationship between an actual sector address and the sector address of the special format area is encrypted and stored, and a format area body in which secret data is stored.

Statement under Art. 19.1 PCT
Claim 1 has been rewritten by integrating the constituent features of claim 8 before amendment with claim 1 before amendment. In a written report of an International Searching Authority, Claim 8 before amendment is considered to involve in an inventive step.

Claim 9 has been rewritten by integrating the constituent features of claim 14 before amendment with claim 9 before amendment. In the views report of the International Searching Authority, Claim 14 before amendment is considered to involve in an inventive step.

As for claim 15, the number of claim which it depends on has been rewritten because of deletion of claim 14.

Claim 16 has been rewritten by integrating a part of the constituent features of claim 8 before amendment with claim 16 before amendment. In the views report of the International Searching Authority, Claim 8 before amendment is considered to involve in an inventive step.
